# EUROPEAN PATENT APPLICATION

(11) **EP 1 207 184 A1**
(43) Date of publication of application: **22.05.2002**
(21) Application number: 01127277.0
(22) Date of filing: 16.11.2001
(51) Int. Cl.: C08L 21/00, B60C 1/00, C08K 3/36

(54) **Silica-containing curable-rubber mix for producing tire tread plies**

(30) Priority: 17.11.2000 IT TO001082
(71) Applicant: BRIDGESTONE CORPORATION, Tokyo 104-0031 (JP)
(72) Inventor: Hromadkova, Alice, 00040 Santa Maria Delle Mole (IT)
(74) Representative: Jorio, Paolo

(57) **Abstract**

A silica-containing curable-rubber mix for producing tire tread plies, in particular for passenger car tires; the mix having a "reinforcing filler-salt" quantity wherein a "carbon black-salt" quantity is over 48% by weight, and the carbon black equals at least 30% by weight.

## Description

The present invention relates to a silica-containing mix for producing tire tread plies, in particular for passenger car tires.

Here and hereinafter:
- the term "silica" is intended to mean a silicon dioxide-based reinforcing agent;
- the term "silica-containing mix" is intended to mean a mix containing various reinforcing agents which definitely comprise silica;
- the term "cross-linkable unsaturated-chain polymer base" is intended to mean any natural or synthetic noncross-linked polymer capable of assuming all the chemical, physical and mechanical characteristics typical of elastomers when cross-linked (cured) with sulphur-based systems;
- the term "reinforcing filler quantity" is intended to mean the quantity of reinforcing filler defined by carbon black and silica plus a quantity of an inorganic salt;
- the term "carbon black-salt quantity" is intended to mean the quantity of carbon black plus the quantity of an inorganic salt.

In the production of mixes for tire tread plies, reinforcing fillers are used in which carbon black is replaced partly or entirely by inorganic reinforcing agents, such as chalk, talc, kaolin, bentonite, titanium dioxide, various types of silicate and, above all, silica.

While affording considerable advantages in terms of rolling resistance and wet road-holding capacity, substituting silica for carbon black in such mixes has the disadvantage, in direct proportion to the silica content, of increasing the electrical resistivity of the mix.

This is particularly undesirable when mixes with silica-based reinforcing fillers are used for producing passenger car tire tread plies, in which case, the high resistivity imparted to the tread plies by the silica-based reinforcing filler prevents electrostatic charges, inevitably formed on car bodies, from being discharged freely to ground.

To enable ground discharge of electrostatic charges, tread plies made from mixes with a silica-containing reinforcing filler are known to be inserted with one or more conducting elements, each of which is normally defined by a conducting mix, and has a surface defining a portion of the rolling surface of the tread. The presence of such conducting elements, however, poses various drawbacks, as a result of potentially irregular wear of the tread as a whole, and the complex preparation required of the tread, which may even involve using nonstandard production equipment. For example, whereas a tread with no conducting elements is normally produced using a single-screw extruder, a tread with conducting elements calls for the use of an extruder with at least two screws.

A further drawback of using mixes with a silica-based reinforcing filler is the relatively high cost - due to the complex production process involved - of the silica itself.

In this connection, it should be pointed out that the silica used in the rubber industry is normally obtained by a process of precipitation, which substantially consists in precipitating the silica by neutralizing a soluble-silicate solution with neutralizing agents under given, e.g. temperature, pH, silicate concentration, conditions. The most commonly used neutralizing agents are hydrochloric, sulphuric, phosphoric, and carbonic acid.

Once precipitated, the silica is first separated from the excess water by filtering, and is then washed to eliminate any precipitation by-products, such as salts, which are incorporated in and form about 30% by weight of the silica.

In the silica production process, washing the precipitated silica obviously involves a considerable outlay, both in terms of time and cost, particularly in view of the large amount of distilled water required for the washing process. Moreover, the salts separated from the silica are normally disposed of directly, e.g. into rivers, lakes or the sea, and are therefore a serious source of pollution. Alternatively, they may be recycled, which, while solving the pollution problem, further increases the cost of the silica production process.

It is an object of the present invention to provide a silica-containing curable-rubber mix for producing tread plies, designed to eliminate the drawbacks posed by the poor conductivity of silica-containing mixes.

It is a further object of the present invention to provide a silica-containing curable-rubber mix enabling the use of a simplified, and therefore relatively low-cost, silica production process.

According to the present invention, there is provided a silica-containing curable-rubber mix for producing tire tread plies, in particular for passenger car tires; the mix comprising at least one cross-linkable unsaturated-chain polymer base, and a reinforcing filler comprising carbon black and silica, and being characterized by comprising an inorganic salt, the cationic part of which is selected from the group comprising Na⁺, Li⁺, Mg⁺⁺ and K⁺ or combinations thereof, and the anionic part of which is selected from the group comprising Cl⁻, SO4⁻⁻, CO3⁻⁻ and PO4⁻⁻⁻ or combinations thereof; and by the mix containing a reinforcing filler-salt quantity, of which over 48% by weight is defined by a carbon black-salt quantity, and at least 30% by weight is defined by carbon black.

Preferably, the carbon black-salt quantity in the reinforcing filler-salt quantity ranges from 50% to 55% by weight.

Preferably, the inorganic salt is incorporated in the silica, and is derived from the silica production process.

Preferably, the inorganic salt is defined by Na₂SO₄.

Preferably, the reinforcing filler comprises a carbon black quantity ranging from 20 to 70 phr, and a silica quantity ranging from 5 to 70 phr.

Preferably, the reinforcing filler in the curable-rubber mix ranges from 30 to 110 phr.

A number of non-limiting embodiments of the present invention will be described purely by way of example.

### EXAMPLES

The following are four examples of four different mixes. More specifically, Examples 1, 2, 3 relate to three mixes (A, B, C) produced in accordance with the teachings of the present invention, and Example 4 to a comparison mix (D) produced in accordance with the known state of the art.

To show clearly the advantages of the invention, the four mixes A-D differ solely as regards the composition of the reinforcing filler-salt quantity, the other components being the same, both in type and parts by weight, for all four mixes.

1.2 kg of the mixes shown below was prepared in the usual way using a roughly 1.6-liter Banbury mixer at a speed of 40 to 80 rpm. Mixing was performed in two steps: a first step wherein all the components, except the curing agents, were mixed at 120 to 170°C for 2 to 5 minutes; and a second step wherein the curing agents were added, operating at a lower temperature of 105°C for 1 minute. Finally, the mixes were molded into sheets and cured at 160°C for 15 minutes.

In the examples:
- the carbon black has a surface area value of 50 to 170 m²/g obtained using ASTM method D4820;
- the carbon black has a "structure" value of 50 to 170 DBP ml/100g obtained using ASTM method D2414;
- the silica has a total surface area value of 100 to 400 m²/g obtained using ASTM method D1993;
- the silica has an "external surface area" value of 100 to 300 CTAB m²/g obtained, in this case, using ISO/CD method DAM2 5794-1;
- the preferred cross-linkable unsaturated-chain polymer bases are selected from the group comprising natural rubber, polyisoprene, polybutadiene, isobutene-isoprene copolymers, possibly halogenated, acrylonitrile-butadiene, butadiene-styrene and isoprene-butadienestyrene terpolymers, either in solution or emulsion, and ethylene-propylene-diene terpolymers. The above polymer bases may be used individually or mixed according to the required characteristics of the finished product.

### EXAMPLE 1 - MIX A

Using the known methods indicated above, a mix A was prepared comprising an inorganic salt.

The composition of mix A is shown in TABLE I, in which the component quantities are expressed in parts by weight per hundred parts of total polymer base (phr).

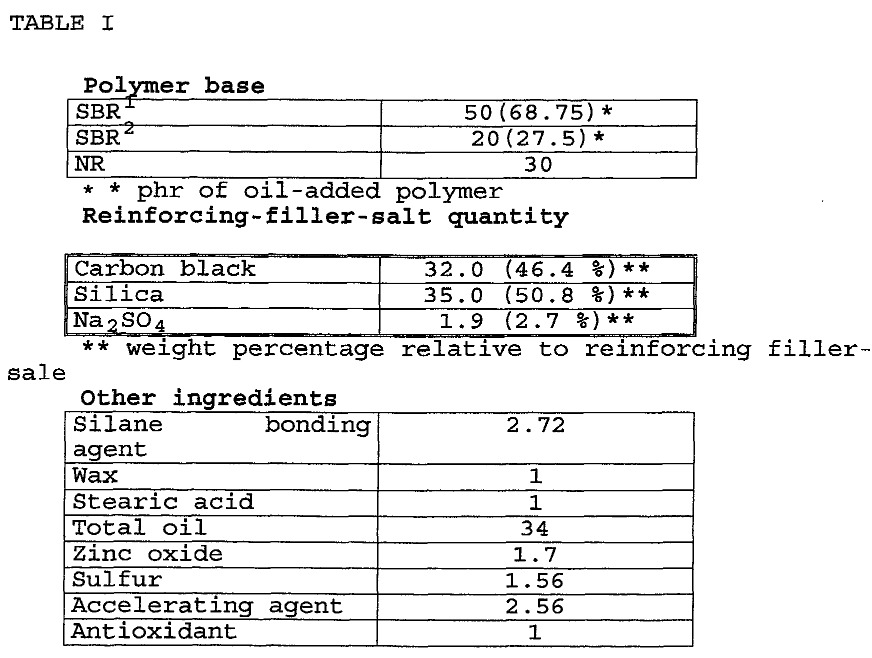

The characteristics of the ingredients used are as follows:
**SBR**^{**1**} = butadiene-styrene copolymer such as EUROPRENE S1712 (ENICHEM - Italy)
**SBR**^{**2**} = butadiene-styrene copolymer such as EUROPRENE S1721 (ENICHEM - Italy)
**NR** = natural rubber such as TSR20 (THAITECH RUBBER)
**Silica** = such as ULTRASIL VN3 (DEGUSSA - Germany)
**Carbon black** = standard carbon black such as N234, VULCAN 7 H (CABOT - Italy)
**Silane bonding agent** = such as Si 69 ( DEGUSSA - Belgium)
**Wax** = such as ANTIOZONANT WAX 6065 (SCHUMANN SASOL GMBH & CO KG - Germany)
**Stearic acid =** such as INDUSTRENE R (UNICHEMA - Germany)
**Oil** = such as ESAR 90DEN (AGIP PETROLI - Italy)
**Zinc oxide** = such as OSSIDO DI ZINCO SIGGILLO VERDE (ZINOX SRL - Italy)
**Sulphur** = such as GROUND SULPHUR (SOLVAY BARIUM STRONZIUM GMBH - Germany)
**Accelerating agent** = such as TBBS (FLEXIS), MBTS (FLEXIS) and DPG (FLEXIS) appropriately dosed
**Antioxidant** = such as SANTOFLEX 6PPD (FLEXSYS - Belgium)

### EXAMPLE 2 - MIX B

A mix B was prepared comprising a reinforcing-filler-salt quantity composition as shown in TABLE II in phr.

**TABLE II**

| **Reinforcing filler-salt quantity** | |
|---|---|
| Carbon black | 32 (44 %)** |
| Silica | 35 (48 %)** |
| Na₂SO₄ | 5.6 (8 %)** |

| | |
|---|---|
| ** weight percentage relative to reinforcing filler-salt quantity | |

### EXAMPLE 3 - MIX C

A mix C was prepared comprising a reinforcing-filler-salt quantity composition as shown in TABLE III in phr.

**TABLE III**

| **Reinforcing filler-salt quantity** | |
|---|---|
| Carbon black | 32 (40.7 %)** |
| Silica | 35 (44.3 %)** |
| Na₂SO₄ | 11.7 (15.0 %)** |

| | |
|---|---|
| ** weight percentage relative to reinforcing filler-salt quantity | |

### EXAMPLE 4 - MIX D

A mix D was prepared in accordance with the teachings of the known state of the art, i.e. with no inorganic salt.

Mix D comprises a reinforcing filler-salt quantity composition as shown in TABLE IV in phr. The right-hand column in Table IV shows the weight percentages of the reinforcing filler-salt quantity ingredients.

**TABLE IV**

| **Reinforcing filler-salt quantity** | |
|---|---|
| Carbon black | 32 (48 %)** |
| Silica | 35 (52 %)** |
| Na₂SO₄ | -- |

| | |
|---|---|
| ** weight percentage relative to reinforcing filler-salt quantity | |

### EXAMPLE 5 - Laboratory test results of specimens of mixes A, B, C, D

Specimens were taken from each of the mixtures in Examples 1 to 4 and tested to determine, for each mixture, the values of a number of particularly significant parameters.

The results of each parameter for each specimen are shown in TABLE V below.

The parameters considered were the following:
- **rheometric values (Tmin, Tmax, t'10, t'50, t'90)** measured in accordance with ASTM standard D2084;
- **Mooney viscosity and scorch time,** both calculated at 130°C and measured in accordance with ASTM standard D1646;
- **physical property values (ultimate elongation EB%, fracture strength TB, M50% / M300% modulus values),** measured in accordance with ASTM standard D412C;
- **loss factor [TanD]** : the ratio between the viscous component of the dynamic modulus [G''(MPa)] and the elastic component of the dynamic modulus [G'(MPa)], both measured in accordance with ASTM standard D5992; more specifically, the 70°C TanD value is a parameter proportional to rolling resistance;
- **electrical resistivity values,** obtained in accordance with ASTM standard D991-89.

**TABLE V**

| MIX | A | B | C | D |
|---|---|---|---|---|
| Tmin (dNm) | 6.7 | 6.7 | 6.6 | 6.9 |
| Tmax (dNm) | 32.1 | 32.1 | 32.0 | 32.0 |
| T'10 (min) | 3.47 | 3.40 | 3.39 | 3.50 |
| T'50 (min) | 4.39 | 4.30 | 4.25 | 4.44 |
| T'90 (min) | 6.00 | 5.90 | 5.75 | 6.10 |
| EB (%) | 468 | 447 | 420 | 494 |
| TB (Mpa) | 19.1 | 18.8 | 18.0 | 19.7 |
| M50% (Mpa) | 1.2 | 1.2 | 1.2 | 1.2 |
| M300% (Mpa) | 10.3 | 10.4 | 10.7 | 9.9 |
| Scorch time (min) | 11.50 | 11.22 | 11.00 | 12.18 |
| Mooney viscosity (Mooney units) | 45 | 44 | 42 | 48 |
| TanD at 70°C | 0.201 | 0.190 | 0.180 | 0.208 |
| ELECTRICAL RESISTIVITY (Ohm cm) | 5.5x10⁷ | 5.5x10⁶ | 5.5x10⁵ | 2.75⁸x10 |

As shown in TABLE V, the presence of inorganic salt in the mix greatly reduces the electrical resistivity of the mix with no change in the other physical characteristic values, thus eliminating the drawbacks while at the same time retaining the advantages of silica-containing mixes, e.g. better rolling resistance, as shown by the 70°C TanD values.

Another important point to note is that the mixes according to the present invention permit the use of silica comprising inorganic salt, and therefore provide for greatly reducing, if not eliminating altogether, the washing stage in the silica production process, with obvious advantages in terms of both time and cost.

## Claims

1. A silica-containing curable-rubber mix for producing tire tread plies, in particular for passenger car tires; the mix comprising at least one cross-linkable unsaturated-chain polymer base, and a reinforcing filler comprising carbon black and silica, and being **characterized by** comprising an inorganic salt, the cationic part of which is selected from the group comprising Na⁺, Li⁺, Mg⁺⁺ and K⁺ or combinations thereof, and the anionic part of which is selected from the group comprising Cl⁻, SO4⁻⁻, CO3⁻⁻ and PO4⁻⁻⁻ or combinations thereof; and by the mix containing a reinforcing filler-salt quantity, of which over 48% by weight is defined by a carbon black-salt quantity, and at least 30% by weight is defined by carbon black.

2. A mix as claimed in Claim 1, wherein the carbon black-salt quantity in the reinforcing filler-salt quantity ranges from 50% to 55% by weight.

3. A mix as claimed in Claim 1 or 2, wherein the inorganic salt is incorporated in the silica, and is derived from the silica production process.

4. A mix as claimed in any one of the foregoing Claims, wherein the inorganic salt is defined by Na₂SO₄.

5. A mix as claimed in any one of the foregoing Claims, wherein said reinforcing filler comprises a carbon black quantity ranging from 20 to 70 phr, and a silica quantity ranging from 5 to 70 phr.

6. A mix as claimed in any one of the foregoing Claims, wherein said reinforcing filler in said curable-rubber mix ranges from 30 to 110 phr.

7. A mix as claimed in any one of the foregoing Claims, wherein said silica has total surface area values ranging from 100 to 400 m²/g, and external surface area values ranging from 100 to 300 CTAB m²/g.

8. A mix as claimed in any one of the foregoing Claims, wherein said cross-linkable unsaturated-chain polymer base is selected from the group comprising natural rubber, polyisoprene, polybutadiene, isobutene-isoprene copolymers, possibly halogenated, acrylonitrile-butadiene, butadiene-styrene and isoprene-butadienestyrene terpolymers, either in solution or emulsion, and ethylene-propylene-diene terpolymers; which polymer bases may be used individually or mixed.

9. A tread, **characterized by** being made from a mix as claimed in any one of the foregoing Claims.

10. A passenger road vehicle tire, **characterized by** comprising a tread as claimed in Claim 9.
